# EUROPÄISCHE PATENTSCHRIFT

(11) **EP 1 332 165 B1**
(45) Veröffentlichungstag und Bekanntmachung des Hinweises auf die Patenterteilung: **15.09.2004**
(21) Anmeldenummer: 01956375.8
(22) Anmeldetag: 24.07.2001
(51) Int. Cl.: C08F 255/02, C09D 123/02, C09D 151/06, C08K 5/00

(54) **CHLORFREIES PLASTISOL BZW. ORGANOSOL AUF POLYOLEFIN-BASIS UND VERFAHREN ZUR HERSTELLUNG**
CHLORINE-FREE POLYOLEFIN-BASED PLASTISOL OR ORGANOSOL AND METHOD FOR PRODUCING THE SAME
PLASTISOL OU ORGANOSOL EXEMPT DE CHLORE, A BASE DE POLYOLEFINE, ET LEUR PROCEDE DE PRODUCTION

(30) Priorität: 27.07.2000 DE 10036520; 28.09.2000 DE 10048055
(43) Veröffentlichungstag der Anmeldung: 06.08.2003
(73) Patentinhaber: Marinow, Slaweyko, Prof., Dr., 06120 Halle (DE)
(72) Erfinder: Marinow, Slaweyko, Prof., Dr., 06120 Halle (DE)
(74) Vertreter: Wablat, Wolfgang, Dr.Dr.
(86) Internationale Anmeldenummer: PCT/DE2001/002797
(87) Internationale Veröffentlichungsnummer: WO 2002/010235

(56) Entgegenhaltungen:
- EP-A- 0 769 539

## Beschreibung

Die Erfindung betrifft chlorfreie Plastisole bzw. Organosole auf Polyolefin-Basis und Verfahren zur Herstellung.

Unter Plastisolen bzw. Organosolen werden im allgemeinen Dispersionen von feinteiligen Kunststoffpulvern in Weichmachern verstanden, welche beim Erwärmen auf höhere Temperaturen aushärten bzw. gelieren. Die derzeit in der Praxis gebräuchlichen Organosole bzw. Plastisole bestehen in der Regel aus feinteiligem
- Polyvinylchlorid (PVC),
- Polyvinylchlorid-Vinylacetat-Copolymeren (PVCIPVAc),
- Polymethylmethacrylat (PMMA) und
- Polyalkylmethacrylat (PAMA) z.B. Polymethylmethacrylatcopolymeren,
welches in einem flüssigen Weichmacher dispergiert ist und eine Paste bildet.

Für eine gewünschte Beeinflussung von Verarbeitungs- und Anwendungseigenschaften werden die Pasten auch mit polymerisations- bzw. copolymerisationsfähigen mehrfunktionellen Monomeren, Oligomeren oder Prepolymeren und entsprechenden Initiator-Systemen versetzt.

Die so erhaltenen Plastisole bzw. Organosole finden für die verschiedensten Zwekke Anwendung, insbesondere als Dichtungs- und Schallisolationsmasse, als Kraftfahrzeug-Unterbodenschutz, als Korrosionsschutzüberzüge für Metalle, als Beschichtung von Metallblechbändern (coil coating), zum Imprägnieren und Beschichten von Substraten aus Textilmaterialien und Papier, als Schlußstrichmassen bei PVC-Fußbodenbeschichtungen, als Kabelisolierungen u.v.a.

Bei allen diesen Anwendungen konnten sich die Plastisole bzw. Organosole auf PMMA- und PAMA-Basis trotz ihrer guten Umweltverträglichkeit gegenüber PVC-haltigen Plastisolen bzw. Organosolen aus den verschiedensten Gründen nicht durchsetzen. So z.B. ergeben Plastisole bzw. Organosole auf PMMA- oder PAMA-Basis nach dem Ausgelieren bei ca. 150°C einen stabilen Überzug. Nach dem Abkühlen des Überzugs auf Raumtemperatur tritt jedoch das Problem auf, dass im Material enthaltene Weichmacher ausbluten. Dieses Phänomen ist besonders aus geprägt bei Phthalsäureester-Weichmachern, die am häufigsten verwendet werden.

Durch Verbesserung der Kompatibilität der Polymere bzw. Copolymere mit Phthalsäureester-Weichmachern gelingt es, einen stabilen Überzug herzustellen. Dazu wird der Anteil an Acrylsäureester oder Methacrylsäureester höherer Alkohole im Copolymeren mit Methylmethacrylat erhöht.

In diesem Fall tritt aber das Problem auf, dass keine Sprühbeschichtung mehr durchgeführt werden kann, weil die Viskosität des so hergestellten Plastisols innerhalb einer kurzen Zeit so erhöht wird, dass ein verfestigtes Produkt entsteht.

Zur Verbesserung der Lagerfähigkeit wurde vorgeschlagen, Polymerteilchen mit größeren Durchmessern zu verwenden. Die Anwendung dieser Maßnahme ist naturgemäß begrenzt, weil Polymerteilchen mit einem Druckmesser von mehr als 10 µm zu Problemen beim Auftragen des Überzuges (Verstopfung der Sprühdüse, Begrenzung der Versprühungsbreite) führen. Neben der begrenzten Lagerfähigkeit haben sich vor allem das schlechte Preis-/Leistungsverhältnis sowie die arbeitshygienischen Probleme bei der Herstellung und Verarbeitung von Plastisolen bzw. Organosolen auf PMMA- oder PAMA-Basis als besonders nachteilig gegenüber den PVC-haltigen Plastisolen bzw. Organosolen erwiesen.

In diesem Zusammenhang werden z.Z. für die o.g. Anwendungen hauptsächlich PVC-haltige Plastisole bzw. Organosole verwendet.

Bei der Herstellung und Anwendung von PVC-haltigen Plastisolen bzw. Organosolen treten jedoch eine Reihe von schwerwiegenden Problemen auf. So z. B. können Monomer-Reste im PVC, bereits bei der Verarbeitung, Personen gefährden. Bei der Anwendung von PVC-haltigen Plastisolen bzw. Organosolen ist es nachteilig, dass das PVC sowohl wärme- als auch lichtempfindlich ist und zur Abspaltung von Chlorwasserstoff neigt. Die Abspaltung von Chlorwasserstoff stellt ein sehr ernstes Problem bei der Anwendung dar, weil unter den herrschenden Geliertemperaturen eventuell frei werdender Chlorwasserstoff korrodierend wirkt und dabei metallische Substrate angreift.

Zur Behebung dieses Nachteils werden Wärmestabilisatoren zugesetzt, die jedoch häufig toxisch sind und somit ein Gefahrenpotential bei der Applikation und beim Gebrauch darstellen.

Ein besonders schwerwiegendes Problem stellt die Entsorgung von Abfällen und gebrauchten Beschichtungen aus PVC-haltigen Plastisolen bzw. Organosolen dar. Bei einer thermischen Entsorgung entsteht Chlorwasserstoffgas (HCl) und polychlorierte Dibenzofurane und -dioxine, was zu erheblichen Umweltproblemen führt. Dementsprechend ist die Entsorgung von Abfällen und gebrauchten Beschichtungen aus PVC-haltigen Plastisolen bzw. Organosolen nur in Sonderdeponien unter erheblichem Kostenaufwand möglich. Dadurch wird auch eine erhebliche Verschlechterung des Preis-/Leistungsverhältsnisses von PVC-Plastisolen bzw. Organosolen verursacht.

Es werden auch Anstrengungen unternommen, um die Menge des entstehenden Chlorwasserstoffgases bei der Verbrennung von PVC zu reduzieren. Bekannt ist das Einarbeiten in die Plastisole bzw. Organosole von relativ großen Mengen an Verbindungen, die entstehendes Chlorwasserstoffgas binden oder neutralisieren, wie z.B. Oxide, Carbonate, Hydroxide oder organische Säuresalze von Alkalimetallen oder Erdalkalimetallen. Dadurch tritt aber das Problem auf, dass die Plastisole bzw. Organosole wegen der relativ hohen Viskositätszunahme nicht mehr durch Sprühbeschichtung aufgebracht werden können sowie das spezifische Gewicht der Beschichtungen wesentlich erhöht wird.

Als chlorfreies Beschichtungsmaterial finden Polyolefine, insbesondere Polyethylen, eine breite Anwendung. Polyethylenbeschichtungen zeichnen sich durch sehr gute Chemikalien- und Feuchtigkeitsbeständigkeit, hohe Elastizität und Korrosionsbeständigkeit aus. Sie werden durch Schmelzfilmauftrag im Walzen- oder Extrusionsverfahren sowie durch Flammspritzen, elektrostatisches Aufsprühen oder Wirbelsintern von Pulvern aufgebracht. Man hat auch versucht, vor allem Polyethylen als Dispersion zu verarbeiten, da diese den Anwendungsbereich von Polyethylenbeschichtungen beträchtlich ausweiten. Dispersionsbeschichtungen sind nicht auf vollflächiges Auftragen beschränkt, eignen sich sehr gut für unregelmäßig geformte Oberflächen sowie für spezielle Auftragverfahren (z.B. Siebwalzen-Rackeln).

Zur Herstellung von wässrigen Polyethylen-Dispersionen sind bereits verschiedene Vorschläge gemacht worden. So wird in der EP 0246729 die Herstellung einer wässrigen Dispersion aus einem hydrophoben Polymer, d.h. aus einem Polyolefin oder daraus abgeleiteten Copolymeren und einem wasserlöslichen thermoplastischen Olefin-Copolymers, das Carboxylatgruppen enthält (0,1 bis 5 mg/COO^{·} g), beschrieben. In Verbindung mit anionischen oder nichtionischen oberflächenaktiven Agenzien, organischen Lösungsmitteln und Wasser, werden feste Polyolefin-Dispersionen erhalten, die durch zusätzliche Zugabe von Wasser in fließfähige Dispersionen umgewandelt werden können. Deren Eignung als Überzugsmaterial wird zwar genannt, allerdings fehlen Aussagen über Schichtdicken, Trocknungsbedingungen und die Qualität der Beschichtungen.

Es ist auch bekannt, wässrige PE-Dispersionen durch Suspendieren von feinteiligem PE-Pulver im Wasser mit Hilfe von Netzmitteln und Einarbeiten von Additiven zur Viskositätserniedrigung, Thixotropierung und Koagolierung herzustellen [Kunststoffe 59 (1969) 9 S. 545/549]. Als Folge des sehr hohen Preises von feinteiligem PE-Pulvern haben solche Dispersionen ein sehr schlechtes Preis-/Leistungsverhältnis [Kunststoffe 84 (1994) 11 S. 1611/1613].

Mittelviskose wässrige Dispersionen aus Polyethylen, die als Papierbeschichtungen einsetzbar sind, werden mit Hilfe eines Suspendiermittels aus einem Reaktionsprodukt von Fettalkoholen mit Ethylenoxid in Kombination mit wasserlöslichen, nichtionogenen Polymeren mit Verdickerwirkung erhalten (DE-PS 3740155).

Derartige Dispersionen haben den Nachteil, dass sie einen relativ geringen Feststoffgehalt (in der Regel 10 bis 40 %) aufweisen und sich somit nur für dünne lackartige Beschichtungen (50 bis 500 µm) eignen. Bei der Verwendung als Dichtungsmasse und für dickere Überzüge besteht aufgrund des hohen Anteils an flüchtigen Bestandteilen die Gefahr der Bildung von Blasen, Spannungsrissen usw. Desweiteren ist es bekannt, dass die Haftung der Polyethylenfilme entscheidend von der Aufschmelztemperatur abhängt. Festhaftende Überzüge sind nur bei Temperaturen zwischen 200°C und 230 °C erhältlich, der Vorgang ist somit durch einen recht hohen Energiebedarf gekennzeichnet.

Die stattfindende Volumenkontraktion als Folge der Kristallisation führt bei PE-Beschichtungen, insbesondere beim Beschichten von folienartigen Substraten oder von Textilien und Papier, weiterhin zu starken Verzugs- und Verwerfungserscheinungen und somit zur Unbrauchbarkeit des Verbundes.

Infolge des unpolaren Charakters von PE sind solche Beschichtungen auch nicht bedruck- und lackierbar.

In der DE-OS 4331667 wird die Herstellung eines Beschichtungsmaterials auf Polyolefin-Basis beschrieben, nachdem Polyolefin-Pulver unter Durchsetzung eines Plasmagases wie Argon, Sauerstoff, Stickstoff, Vinylacetat, Acrylnitril mittels Hochfrequenz- oder Mikrowellenanregung funktionalisiert werden. Durch Dispergierung solcherart behandelter Polyolelfin-Pulver in nichtsiedenden Weichmachern sollen Plastisole erhältlich sein, die als Beschichtungsmaterialien geeignet sind.

Mit solchen Plastisolen lassen sich jedoch keine brauchbaren Beschichtungen herstellen, weil die Weichmachersolvatierung ungenügend ist und nach kurzer Zeit eine intensive Weichmacherausblutung einsetzt.

Als Folge des hohen Preises von entsprechend feinteiligen PO-Pulvern liegt bei diesen Plastisolen ein sehr ungünstiges Preis/Leistungsverhältnis vor.

In DE 4435643 wird ein Stoffgemisch mit Plastisolcharakter beschrieben, das aus feindispersem Pulver von Polyethylen und/oder ausgewählten Ethylencopolymeren und einer als Weichmacher bezeichneten flüssigen Zusammensetzung aus niedermolekularen Komponenten besteht, wobei die verwendeten Weichmacherzusammensetzungen aus gesättigten und/oder olefinisch ungesättigten Kohlenwasserstoffverbindungen des Fettbereiches (Fettsäuren, Fettalkoholen und/oder deren Derivate) das feindisperse Polymer bei der Geliertemperatur lösen und nach dem Abkühlen zu einem Plastigel führen.

Bei den so erhaltenen Plastisolen setzt bereits nach kurzer Zeit eine intensive Weichmacherausblutung ein, so daß keine brauchbaren Beschichtungen hergestellt werden können. Des weiteren weisen diese Beschichtungen auch ungenügende Eigenschaften auf.

Zur Behebung dieser Nachteile wurden in der parallelen Anmeldung DE 4435803 Weichmacherzusammensetzungen vorgeschlagen, die ausschließlich oder zum Teil aus reaktiven Komponenten bestehen, die bei Geliertemperaturen durch den Zusatz entsprechenden Initiator-Systemen unter Molekülvergrößerung reagieren.

Um ein brauchbares Plastisol zu erhalten, ist es bei beiden Anmeldungen erforderlich, bei jeweiligen Geliertemperaturen und -zeit ein homogenes Auflösen des Polymers in der Weichmacherzusammensetzung zu erreichen. Hierfür ist eine sehr feine Dispersität des Polymers mit einer Korngröße möglichst weit unterhalb 30 µm erforderlich. Bei gröberer Dispersität (mittlerer Korngröße > 30 µm) kann eine ausreichend homogene Lösung des Polymers im Weichmacher, insbesondere bei reagierenden Weichmachern, nicht erreicht werden, was eine wesentliche Verschlechterung der Eigenschaften der ausgelierten Beschichtung zur Folge hat.

Am Markt werden zur Zeit Pulver aus verschiedenen Polyethylen- und Ethylencopolymer-Typen mit einer mittleren Korngröße oberhalb 30 µm, allerdings mit einem mehrfach höheren Preis im Vergleich zum Granulat-Preis, angeboten. Mit solchem Pulver hergestellte Plastisole werden neben einem niedrigen Eigenschaftsniveau auch einen relativ hohen Preis und somit ein sehr ungünstiges Preis/Leistungsverhältnis aufweisen. Die vorgeschlagene Vermahlung des Polymers in Gegenwart wenigstens eines Anteils des Weichmachers, z.B. in einem gekühlten Extruder, führt im allgemeinen zu einer groben Dispergierung des Polymers und somit zu einem noch schlechteren Ergebnis.

Eine eventuelle Verzögerung der Reaktionen des Weichmachers, um auch gröbere PO-Teilchen (> 30 µm) zu lösen, führt zu entsprechend längeren Gelierzeiten. Das hat eine Verringerung der Produktivität bei gleichzeitiger Erhöhung des Energieaufwandes des Gelierprozesses zur Folge und führt somit zu einer weiteren Beeinträchtigung des Preis/Leistungsverhältnisses.

Eine weitere nichtwässrige Polyolefin-Dispersion und ein Verfahren zu dessen Herstellung wird in DE 19537527 vorgestellt, wonach ein in den schmelzflüssigen Zustand überführtes Polyolefin in einem fettsäuremodifizierten Polyesterharz unter Verwendung eines nichtflüchtigen flüssigen Weichmachers dispergiert wird. Die so erhaltene feindisperse Zusammensetzung ist durch Zusatz eines Fremdharzes in Form von Epoxidharzen bei Temperaturen zwischen 140°C und 200°C härtbar und kann als Beschichtungsmaterial eingesetzt werden. Die Eigenschaften der Dispersion und der resultierenden Beschichtungen lassen sich im weiten Rahmen dadurch variieren, dass der Dispersion Härtungsbeschleuniger, Reaktionsverdünner und gegebenenfalls geringe Mengen an Lösungsmitteln sowie die üblichen Hilfs- und Zusatzstoffe zugesetzt werden.

Durch die Zuführung von Reaktionsbeschleunigern und Reaktivverdünnern kommt es aber bereits bei Raumtemperatur zu einer Auslösung der Additionsreaktion und somit zu einer wesentlichen Beeinträchtigung der Lagerstabilität der Dispersion, was einen wesentlichen Nachteil gegenüber PVC-Plastisolen darstellt.

Der Erfindung liegt die Aufgabe zugrunde, neuartige Plastsole bzw. Organosole auf Polyolefin-Basis und ein Verfahren für deren Herstellung zu entwickeln. Diese Plastisole bzw. Organosole sollen die hervorragenden Verarbeitungs- und Produktei genschaften von PVC-haltigen Plastisolen bzw. Organosolen aufweisen und gegebenenfalls übertreffen, jedoch chlorfrei sein, d.h. weder Chlor noch Chlorwasserstoff abspalten und somit frei von o.g. Nachteilen bei der Herstellung, Verarbeitung und Entsorgung von PVC-haltigen Plastisolen bzw. Organosolen sein.

Für die Herstellung dieser Plastisole bzw. Organosole sollen im allgemeinen in grobstückiger Form als Granulat oder Krümel vorliegende kommerzielle Polyolefin-Typen verwendet werden. Durch das zu entwickelnde Herstellungsverfahren soll eine wirtschaftlich effiziente feinteilige Dispergierung des in grobstückiger Form vorliegenden Polyolefins in einem Dispersionsmittel erfolgen, so daß ein homogenes Auflösen des Polyolefins im Dispergiermittel beim Ausgelieren des Plastisols innerhalb sehr kurzer Zeiten erreicht werden kann, um Beschichtungen mit hohem Eigenschaftsniveau bei relativ hoher Produktivität und geringem Energieaufwand des Gelierprozesses zu erhalten.

Die neuartigen Polyolefin-Plastisole bzw. Organosole sollen keine bzw. sehr geringe flüchtige Anteile enthalten, eine relativ niedrige Viskosität bei sehr langer Lagerbeständigkeit haben und durch Sprühen, Streichen, Tauchen, Spachteln oder Rollen zu Überzügen mit Schichtdicken bis ca. 2 mm aufgebracht werden können, welche bereits bei Temperaturen unter 200°C zu einer festhaftenden, abriebbeständigen und gegebenenfalls wasser- und chemikalienresistenten Überzugsschicht mit einem relativ niedrigen spezifischen Gewicht und ohne wesentliche Änderung der Auftragsdicke gelieren. Die ausgelierten Beschichtungen sollen bedruck- und lackierbar sein und keine Verzugsneigungen aufweisen.

Erfindungsgemäß wird die Aufgabe durch ein bei Raumtemperatur lagerstabiles und bei Erwärmen auf höhere Temperaturen gelierenden chlorfreien Plastisol bzw. Organosol auf Polyolefinbasis, das gegebenenfalls inerte Füllstoffe sowie weitere übliche Zusatz- und Hilfsstoffe enthält, gelöst, das aus
a) einem feindispergierten Polyolefin in
b) einem Dispersionsmittel in Mengen von 60 bis 800 Gew.-Teilen, bezogen auf 100 Gew.-Teile Polyolefin a), zusammengesetzt aus polyadditionsfähigen oder polymerisierbaren und copolymerisierbaren Monomeren und/oder Oligomeren und/oder Prepolymeren sowie gegebenenfalls flüssigen Weichmachern, die in lösbaren und mischbaren Anteilen so zusammengesetzt wird, dass die Differenz zwischen seinem Lösungsparameter und dem Lösungsparameter des Polyolefins a) unterhalb 2,5 (J/cm³)^{0,5} liegt, sowie
c) einem für die gewünschte Polyaddition und/oder Polymerisation und Copolymerisation geeignetem Initiator-System in an sich bekannten Mengen und
d) gegebenenfalls bis zu 700 Gew.-Teile inerten Füllstoffe sowie weiteren üblichen Zusatz- und Hilfsstoffen, bezogen auf 100 Gew.-Teile Polyolefin a), besteht und in 2 oder 3 unterschiedlichen Temperaturstufen dadurch hergestellt worden ist, dass
   1. ein in grobstückiger Form (Granulat, Krümel, Schnitzel) vorliegendes Polyolefin a) in einer Mischeinrichtung (Kneter, Disolver, Extruder) bei einer Temperatur wenigstens 10 °C oberhalb seiner Schmelztemperatur mit mindestens 20 bis 60 Gew.-Teilen, vorzugsweise 25 bis 35 Gew.-Teilen, eines Dispersionsmittels b) bzw. einiger ausgewählten Komponenten des Dispersionsmittels b), bezogen auf 100 Gew.-Teile Polyolefin a) homogen vermischt wird,
   2. anschließend unter fortwährendem intensivem Mischen auf eine Temperatur von 5 bis 20 °C unterhalb der Schmelztemperatur des Polyolefins a) abgekühlt wird - und gegebenenfalls noch mit 5 bis 70 Gew.-Teilen des Dispersionsmittels b) oder einiger ausgewählten Komponenten des Dispersionsmittels b), bezogen auf 100 Gew.-Teile Polyolefin a) zudosiert und homogen vermischt werden - , wodurch eine feinteilige Dispersion des Polyolefins a) im Dispersionsmittel b) oder in den ausgewählten Komponenten des Dispersionsmittels b) entsteht und
   3. dann bei einer Temperatur unterhalb 60 °C mit dem restlichen Dispersionsmittels b) bzw. mit den restlichen Komponenten des Dispersionsmittels b) bis zu einer Gesamtmenge von 60 bis 800 Gew.-Teile Dispersionsmittel b), bezogen auf 100 Gew.-Teile Polyolefin a) und mit einem geeigneten Initiator-System c) in an sich bekannten Mengen sowie mit bis zu 700 Gew.-Teile inerter Feststoffe und üblicher Hilfs- und Zusatzstoffe d) versetzt und zu einer pastenförmigen Masse mit dem gewünschten Fließverhalten verarbeitet wird.

Zur Gewährleistung eines solchen Verhaltens wird das Dispersionsmittel b) so zusammengesetzt, dass die Differenz zwischen seinem Lösungsparameter und dem Lösungsparameter des Polyolefins a) unterhalb von 2,5 (J/cm³)^{0,5} liegt.

Durch die Beschaffenheit des Polyolefins a) und des Dispersionsmittels b) können die Eigenschaften der erfindungsgemäßen Plastisole bzw. Organosole und der resultierenden Beschichtungen in weiterem Rahmen auch dadurch variiert werden, dass den Plastisolen bzw. Organosolen gegebenenfalls spezielle Additive zur gezielten Beeinflussung der Wasserdampfdurchlässigkeit und der Hydrophilie bzw. Hydrophobie sowie die üblichen Hilfs- und Zusatzstoffe zugesetzt werden.

Hauptkomponente der erfindungsgemäßen Plastisole bzw. Organosole ist ein Polyolefin a), wobei Polyethylen , Polypropylen und/oder Copolymere des Ethylens und Propylens mit einem oder mehreren olefinisch ungesättigten, mit diesen Olefinen copolymerisierbaren Monomeren bevorzugt werden.

Es können alle bekannten Polyethylen- und Polypropylen-Typen Verwendung finden, soweit sie in der Schmelze verarbeitbar sind. Geeignet sind Copolymere des Ethylens oder Propylens mit einem oder mehreren ungesättigten polymerisierbaren Monomeren. Geeignete Comonomere für Olefin-Copolymere sind mit Ethylen oder Propylen copolymerisierbare ungesättigte Verbindungen, z.B. Olefine, Acrylsäure und Methacrylsäure sowie deren Derivate, olefinisch ungesättigte Dicarbonsäuren und deren Derivate Vinylester und -ether.

Beispiele sind Copolymere aus Ethylen bzw. Propylen und höhere α-Olefine von C₃ bis C₈ bzw. deren Isomere z.B. lineares Polyethylen niederer und mittlerer Dichte (PE-LLD bzw. PE-MD), Vinylacetat, Vinylalkohol, Maleinsäureanhydrid, Methyl- oder Ethylacrylat. Der Anteil der Comonomeren liegt zwischen 1 und 50 Mol-%, vorzugsweise zwischen 2 und 15 Mol-% und wird so bemessen, dass der Schmelzpunkt der Olefin-Copolymeren zwischen 60 und 160 °C, vorzugsweise zwischen 80 und 140 °C liegt.

Vorteilhaft sind auch Polyolefine, die mit Hilfe von polaren und/oder reaktiven Gruppen wie Säuren und Estern nachträglich modifiziert wurden.

Ein Weg, zu solchen modifizierten Polyolefinen zu gelangen besteht darin, das Polyolefin in der Schmelze in Gegenwart von thermisch zerfallenden Initiatoren mit radikalisch polymerisierbaren Monomeren zu pfropfen. Als Pfropfmonomere sind geeignet: (Meth)acrylsäure, (Meth)acrylsäureester, Maleinsäureanhydrid, Itaconsäureanhydrid, Vinylacetat, Triethoxyvinylsilan u.a..

Die Polyolefine können einzeln oder als Mischungen verschiedener Polyolefine verwendet werden.

Gut geeignet sind weiterhin auch Mischungen der o.g. Polyolefine mit verträglichen bzw. teilverträglichen Kautschuken, die ungesättigte Ketten aufweisen und ganz oder teilweise aus Diolefinen aufgebaut sind (R-Kautschuke), und zwar in Mengen bis zu 80 Gew.-% . Beispiele sind Naturkautschuk (NR), Isopren-Kautschuk (IR), Butadien-Kautschuk (BR), Styrol-Butadien-Kautschuk (SBR), Isopren-Styrol-Kautschuk (SIR), Polynorboren-Kautschuk (PNR), Butyl-Kautschuk (HR) sowie trans-Polyoctenamer-Kautschuk (TOR) und dgl. Außerdem können die Kautschuk-Komponenten aus gesättigten Ketten vom Polymethylen-Typ aufgebaut sein (M-Kautschuk), wie Ethylen-Propylen-(Dien)-Kautschuk (EPM oder EPDM), Ethylen-Acrylester-Kautschuk (AECM), Ethylen-Vinylacetat-Kautschuk (EAM) sowie AcrylatKautschuk (ACM, ABR, ANM).

Weiterhin können auch TPE-Blockcopolymere eingesetzt werden. Dazu gehören Blends aus Polyolefinen mit vernetzter Elastomerphase, lonomere, amorphe Teleblockcopolymere (Triblockcopolymere) mit langkettigem Weichsegmentmittelblock und endständigem Hartsegmentblock, wobei die Hartdomäne als Vernetzungsstelle wirkt, sowie Blends mit Thermoplasten und Segmentcopolymeren aus langkettigen Weichsegmentblöcken und Hartsegmentblöcken mit Kristallisationsneigung. Geeignete Substanzen sind besonders Styrol-Ethenbuten-Styrol-Dreiblockcopolymere (SEBS), Styrol-Ethenpropen-Styrol-Dreiblockcopolymere (SEPS) u.a.m.

Die weitere wesentliche Komponente der erfindungsgemäßen Plastisolen bzw. Organosolen ist ein Dispersionsmittel b), das aus flüssigen bzw. bei niedriger Temperatur schmelzenden polyadditionsfähigen und/ oder polymerisier- und copolymerisierbaren Monomeren und/ oder Oligomeren und/ oder Prepolymeren, sowie gegebenenfalls flüssigen Weichmachern in lösbaren bzw. mischbaren Anteile besteht.

Es ist erfindungsgemäß so zusammengesetzt, dass es das Polyolefin a) bei Raumtemperatur nicht löst und nicht oder nur geringfügig quellt, aber bei Temperaturen oberhalb seiner Schmelztemperatur löst und zur Entstehung von hochkonzentrierten Lösungen bzw. Kolloidlösungen des Polyolefins a) führt.

Ein bevorzugtes Dispersionsmittel b) wird verwendet, das aus Epoxidverbindungen (Monomere und/oder Oligomere und/oder Prepolymere) und gegebenenfalls flüssigen Weichmachern (unter Berücksichtigung der Quellbarkeit und Löslichkeit und eventuellen chemischen Kopplung) besteht, wobei für das Ausgelieren des Plastisols bzw. Organosols ein Initiator-System c) auf Basis latenter Polyadditionsinitiatoren, katalytisch wirkender Lewis-saurer Polymerisationsinitiatoren oder latenter Carbonsäuresalze tertiärer Amine und/oder üblicher kationischer Photoinitiatoren verwendet wird.

Für die Zusammensetzung eines erfindungsgemäßen Dispersionsmittels b) auf Basis von Epoxidverbindungen sind z.B. geeignet:
aliphatische Glyzidether oder -ester, wie Mono- oder Diglyzidylether bzw. -ester von verzweigten oder nicht verzweigten Alkansäuren, besonders mit ≥ C₆, Mono- oder Diglyzidylether von Poly(alkylenoxid)mono- oder -diglyzidether oder Epoxid-(Kresol)-Novolak-Typen oder Cycloaliphatische Mono- oder Diglyzidester-Typen (z. B. Hexahydrophtalsäurediglyzidester) oder Cycloaliphatische Mono- oder Diglyzidester-Typen mit direkt gebundenen Epoxid-Gruppen (z.B. 3,4-Epoxycyclohexylmethyl-3,4-epoxycyclohexylcarboxylat, Vinylcyclohexendioxid) oder Bisphenol-Glyzidether-Typen, Diglyzidylether, wie z. B. auf Bisphenol-A- oder -F- oder -A/F-Basis.

Als gegebenenfalls zuzusetzende flüssige Weichmacherkomponente des Dispersionsmittels b) sind geeignet: Phtalat-Weichmacher, insbesondere Diisooctylphtalat, Diisononylphtalat, Diisodecylphtalat, Adipin-, Azelain- und Sebazinsäureester (Diisononyladipat, Diisodecyladipat) und/oder Phosphat-Weichmacher und/oder Alkyl-Sulfonsäure-Phenyl-Ester und/oder epoxidierte Fettsäureester (Butyl-, Octylepoxistearate) und/ oder epoxidierte ungesättigte Fettsäureester (epoxidiertes Lein- oder Sojaöl) und/oder Oligomer- bzw. Polymerweichmacher (Polyisobutylen, flüssiges Isopren-, Butadien, Ethylen-Propylen-Dien- oder Butylkautschuk).

Das Ausgelieren des Plastisols bzw. Organosols, das ein aus Epoxidverbindungen zusammengesetztes Dispersionsmitlel b) enthält, erfolgt durch ein entsprechend bemessenes initiator-Systems c) für eine Polyaddition oder für eine ionische Polymerisation.

Für die Polyaddition werden Initiator-Systeme c) aus latenten (geblockten aliphatischen (Poly)aminen, (Poly)amiden sowie Polyaminoamiden (dimerisierte Fettsäuren und Polyalkylenpolyamin) oder niedermolekularen Verbindungen, wie z.B. N-Cyanoguanidin (Dicyandiamid) und Dimethyl-harnstoffderivate (z. B. N,N-(4-Methylm-phenylen) bis (N'-dimethylharnstoff) verwendet.

Geeignete kationische Polymerisationsinitiatoren sind Lewis-Säuren, z.B. Bortrifluorid-Amin-Komplexe, bestehend aus Bortrifluorid-Komplexen des Monoethylamines oder anderen teriären Amine sowie latente carbonsaure Salze tertiärer Amine, wie z.B. Tris-(dimethylaminomethyl)-phenol-tris-2-ethylhexoat).

Ein zweckmäßiges Dispersionsmittel b) kann auch aus radikalisch polymerisierbaren und copolymerisierbaren Allyl- und/oder Vinyl und/oder (Meth)acrylat-Verbindungen (Monomere und/oder Oligomere und/ oder Prepolymere) und/oder ungesättigten Polyester-, Vinylester- Polyesteracrylat-Harzen sowie gegebenenfalls flüssigen Weichmachern bestehen, wobei für das Ausgelieren des Plastisols bzw. Organosols durch eine Polymerisation und Copolymerisation ein Initiator-System c) aus radikalischen Initiatoren, wie z.B. üblichen organischen Peroxiden, und/oder geeigneten Photoinitiatoren verwendet wird.

Geeignete Verbindungen sind z.B.:

Diallylester von Phthalsäuren, wie Diallylphthalat, Diallylterephtalat und dgl.; Diallylester von ethylenisch ungesättigten Carbonsäuren, wie Diallylmaleat, Diallylfumarat, Diallylitaconat und dgl.; Diallylester von gesättigten dibasischen Säuren, wie Diallyladipat, Diallylazelat, Diallylsebazinat und dgl., Diallyether; Triallylcyanurat; Triatlyltrimellitat sowie Diallylphthalatharze und/oder Vinylester, insbesondere monooder difuktionelle Vinylester von verzweigten oder nicht verzweigten Alkansäuren, besonders mit ≥C₆ und/ oder Vinylether, besonders mono- oder difunktionelle Vinylether von verzweigten oder nicht verzweigten Alkoholen mit ≥ C₆ Glykolen oder Phenolen wie Ethylenglycoldivinylether n-Butandioldivinylether, Decandivinyläther, Octadecandivinyläther und dgl. und/oder Dimethacrylsäureester oder Diacrylsäureester von polyfunktionellen Alkoholen, wie Ethylenglycoldimethacrylat, Diethylenglycoldi(meth)acrylat, Triethylenglycoldi(meth)acrylat, Polyethylenglycoldi(meth)acrylat und dgl.; Tri(meth)acrylsäureester von polyfuktionellen Alkoholen, wie Trimethylolpropantriol(meth)acrylat, Trimethylolethantriol(meth)acrylat und dgl.; Poly(alkylenoxid)mono- oder -di(meth)acrylate; Poly(alkandiol) mono- oder-di(meth)acrylate; reaktionsfähige (Meth)acryl-Harze; Bismethacryloyloxyethylenphthalat; 1,3,5 Triacryloylhexahydrotriazin und ähnliche Verbindungen und/ oder ungesättigte Polyesterharze, d.h. Poly-Kondensate aus ungesättigten oder gesättigten Polycarbonsäuren bzw. -anhydriden mit aliphatischen oder aromatischen oder aromatischen höherwertigen Alkoholen (Glykole, Propylenglykole, Butandiol) und/oder Vinylesterharze (Phenacryl-Harze) aus Acrylsäureestern mit Bis-phenol-A-Glyzidether oder epoxidierte Novolacke und/oder Polyesteracrylat-Harze.

Gegebenenfalls enthält das erfindungsgemäße Dispersionsmittel b) auch verträgliche Mengen flüssiger Weichmacher. Geeignet sind die gebräuchlichen Phtalat-Weichmacher, insbesondere Diisooctylphtalat, Diiononylphtalat, Diisodecylphtalat, Adipin-, Azelain- und Sebazinsäureester, Phosphat-Weichmacher, Alkyl-Sulfonsäure-Phenyl-Ester, Epoxidierte Fettsäureester (Butyl-, Octylepoxistearate), epoxidiertes Lein- oder Sojaöl, Polyesterweichmacher (Polyester aus Alkandiolen mit 2-6-C-Atomen und Dicarbonsäuren), Oligomer- oder Polymerweichmacher (Polyisobutylen, flüssiger Isopren-, Butadien-, Ethylen-Propylen-Dien- oder Butylkautschuk), sowie Mineralölweichmacher (aromatischer, naphtenischer, relativ naphtenischer und paraffinischer Typ).

Zum Ausgelieren eines Plastisols bzw. Organosols, das ein aus radikalisch polymerisierbaren und copolymerisierbaren Monomeren und/ oder Prepolymeren sowie gegebenenfalls flüssigen Weichmachern zusammengesetztes Dispersionsmittel b) enthält, wird ein Initiator-System c) verwendet, das aus radikalischen Initiatoren, wie z.B. üblichen organischen Peroxiden, und/oder geeigneten Photoinitiatoren besteht. Beispiele hierfür sind Di-tert.-Butylperoxid, tert.-Butylhydroperoxid, Dikumylperoxid, Dilaurylperoxid, Benzoylperoxid, tert.-Butylperbenzöat u.v.a.

Als ein erfindungsgemäßes Dispersionsmittel b) kann auch eine verträgliche Kombination aus Epoxidverbindungen (Monomere und/oder Oligomere und/oder Prepolymere) und Allyl- und/oder Vinyl- und/ oder (Meth)acrylat-Verbindungen und/oder ungesättigten Polyester-, Vinylester, Polyesteracrylatharzen und gegebenenfalls flüssigen Weichmachern eingesetzt werden, wobei für das Ausgelieren des Plastisols bzw. Organosols durch kombinierte Polyaddition und Polymerisation sowie Co polymerisation ein Initiator-System c) aus gesättigten oder ungesättigten Säureanhydriden und radikalischen Initiatoren, wie z. B. üblichen organischen Peroxiden, und/oder geeigneten Photoinitiatoren verwendet wird.

Als Initiator-System c) können die Photoinitiatoren allein oder in Kombination mit vorgenannten radikalischen und ionischen Initiatoren verwendet werden. Geeignet sind die marktüblichen radikalischen und ionischen Photoinitiatoren.

Erfindungsgemäß werden die feindisperse chlorfreien Plastisole bzw. Organosole auf Polyolefinbasis so hergestellt, daß
1. ein in grobstückiger Form vorliegendes Polyolefin b) in einer Mischeinrichtung bei einer Temperatur wenigstens 10 °C oberhalb seiner Schmelztemperatur mit mindestens 20 bis 60 Gew.-Teilen eines Dispersionsmittels b) bzw. einiger ausgewählten Komponenten des Dispersionsmittels b), bezogen auf 100 Gew.-Teile Polyolefin a) homogen vermischt wird
2. anschließend unter fortwährendem intensivem Mischen auf eine Temperatur von 5 bis 20 °C unterhalb der Schmelztemperatur des Polyolefins a) abgekühlt wird - und gegebenenfalls noch mit 5 bis 70 Gew.-Teilen des Dispersionsmittels b) oder einiger ausgewählten Komponenten des Dispersionsmittels b), bezogen auf 100 Gew.-Teile Polyolefin a) zudosiert und homogen vermischt werden -, wodurch eine feinteilige Dispersion des Polyolefins a) im Dispersionsmittel b) oder in den ausgewählten Komponenten des Dispersionsmittels b) entsteht und
3. dann bei einer Temperatur unterhalb 60 °C mit dem restlichen Dispersionsmittel b) bis zu einer Gesamtmenge von 60 bis 800 Gew.-Teile Dispersionsmittel b), bezogen auf 100 Gew.-Teile Polyolefin a) und mit einem geeigneten Initiator-System c) in an sich bekannten Mengen sowie mit bis zu 700 Gew.-Teile inerter Feststoffe und üblicher Hilfs- und Zusatzstoffe d) versetzt und zu einer pastenförmigen Masse mit dem gewünschten Fließverhalten verarbeitet wird.

Zweckmäßig wird das im allgemeinen in grobstückiger Form (Granulat, Schnitzel, Krümel) vorliegende Polyolefin a) in einer Mischeinrichtung (Kneter, Dissolver, Extruder etc.) bei einer Temperatur, die mindestens 10 °C oberhalb des Schmelzbereiches liegt, mit mindestens 20 bis 60 Gew.-Teilen des Dispersionsmittels b) oder einige ausgewählte Komponenten des Dispersionsmittels b) vermischt, wobei eine hochkonzentrierte Lösung bzw. Kolloidlösung des Polyolefins a) entsteht.

Bei der Abkühlung solcher Lösungen im zweiten Verfahrensschritt unter fortwährendem intensivem Mischen erhält man eine feinteilige Dispersion des Polyolefins a) im Dispersionsmittel b) bzw. in der ausgewählten Komponente des Dispersionsmittels b) beim Unterschreiten der Schmelztemperatur des Polyolefins a). Die so erhaltene Dispersion liegt in Form von festen Agglomerat-Krümel bis knetbarer Masse mit einer Primärkorngröße unterhalb 10 µm vor.

Aus der so erhaltenen feinteiligen Zusammensetzung erhält man im dritten Verfahrensschritt durch Einarbeiten des restlichen Dispersionsmitels b) bzw. der restlichen Komponenten des Dispersionsmittels b) sowie des Initiator-Systems c) und der d) genannten Zusatz-, Hilfs- und Füllstoffe erfindungsgemäße Plastisole bzw. Organosole. Die jeweiligen Komponenten können einzeln oder soweit sie untereinander mischbar sind, in Form eines Masterbachtes hinzugefügt werden, wobei die homogene Einarbeitung bei einer nicht über 70 °C liegenden Temperatur erfolgt.

Vorzugsweise wird im 1. Verfahrensschritt das Polyolefin a) mit 25 bis 35 Gew.-Teilen des Dispersionsmittels b) oder einigen ausgewählten Komponenten des Dispersionsmittels b), bezogen auf 100 Gew.-Teile Polyolefin a), vermischt und homogenisiert.

Gegebenenfalls können im 2. Verfahrensschritt zusätzlich 5 bis 70 Gew.-Teile des Dispersionsmittels b) oder einer Komponente des Dispersionsmittels, bezogen auf 100 Gew.-Teile Polyolefin a), bei einer Temperatur von 5 ° bis 20 °C unterhalb der Schmelztemperatur des Polyolefins a) eingearbeitet werden.

Die erfindungsgemäßen Plastisole bzw. Organosole haben eine relativ niedrige Viskosität bei relativ langer Lagerbeständigkeit. Sie können, entsprechend der eingestellten Viskosität durch Sprühen, Streichen, Tauchen, Rackeln, Spachteln, Kalandrieren oder Gießen zu Überzügen mit Schichtdicken von einigen µm bis ca. 2 mm auf verschiedene Substrate aufgebracht werden.

Danach wird das Ausgelieren des aufgetragenen Plastisols bzw. Organosols vorgenommen. Dazu werden - abhängig von der Zusammensetzung des Plastisols bzw. Organosols und dem jeweiligen Gelierregim - Temperaturen zwischen 100 und 200 °C angewendet. Das Gelieren kann sowohl bei einer über die Zeit konstanten Temperatur, als auch bei über die zeit stufenweise oder stufenlos orhöhtenden Temperaturen vorgenommen werden. Die erforderlichen Gelierzeiten liegen zwischen 1 Minute und mehreren Stunden. Das Aufheizen kann durch Heißluft, Infrarotstrahlen, Hochfrequenz usw. erfolgen.

Die erfindungsgemäßen Plastisole bzw. Organosole lassen sich auch mittels IR-Laserstrahlen schichtweise zu Formkörper selektiv ausgelieren. Beim Ausgelieren von erfindungsgemäßen Plastisolen unter Verwendung von Photoinitiatoren wird das aufgetragene Plastisol vor der UV-Belichtung zur homogenen Aufschließung der Polyolefinpartikel entsprechend erwärmt. Es kann auch ein schichtweises selektives Ausgelieren zu Formkörper durch eine nacheinander folgende IR- und UV-Laserbestrahlung oder nur durch UV-Laserbestrahlung vom entsprechend vorgewärmten Plastisol vorgenommen werden.

Die Eigenschaften der Überzüge aus erfindungsgemäßen Plastisolen bzw. Organosolen lassen sich je nach Zusammensetzung in einem breiten Spektrum variieren. Man kann dabei thermoplastische und gummielastische bis harte und steife Folien und Überzüge herstellen.

Die erfindungsgemäßen Plastisole bzw. Organosole weisen somit ausgezeichnete physikalische Eigenschaften, eine ausgezeichnete Verarbeitbarkeit, Sicherheit und Wirtschaftlichkeit auf, die ebenso gut sind, wie diejenigen von PVC-Plastisolen. Bezüglich der Entsorgung von Abfällen und gebrauchten Beschichtungen haben Sie jedoch große Vorteile gegenüber PVC-Plastisolen. So z.B. führt eine thermische Entsorgung zu keinen Umweltproblemen und somit zu keinem Kostenaufwand für Sonderdeponien und dementsprechend zu keiner Verschlechterung des Preis/Leistungs-Verhältnisses.

Durch die Gewährleistung von vielfältigen Eigenschaftskombinationen sind die erfindungsgemäßen Plastisole bzw. Organosole für viele Anwendungen geeignet und stellen eine vorteilhafte Alternative zu derzeit verwendeten Plastisolen, insbesondere auf PVC-Basis, dar.

Besonders geeignet sind die erfindungsgemäßen Plastisole bzw. Organosole als Korrosions- und Abriebschutz für Metalle, als Beschichtung von Metallblechbändern (coil coating), als Dichtungs- und Antidrönmassen, als Kraftfahrzeug-Unterbodenschutz, als Nahtabdichtung zum Egalisieren von Schweißnähten und als Metallkleber.

Sie sind weiterhin geeignet zum Imprägnieren und Beschichten von Textilien, Papier und ähnlichen Substraten, wie Planen, Kunstleder, Fußbodenbelägen, Teppichrükken, Verpackungsmaterialien, Tapeten uva.

Im Extrusionsverfahren lassen sich hochelastische Profile, wie Dichtungsschnüre und -bänder sowie verschiedenartige Schichtverbundmaterialien in Kombination mit verschiedenen Polymeren herstellen.

Das selektive schichtweise Ausgelieren der erfindungsgemäßen Plastisole bzw. Organosole zu verschiedenartige Formkörper eröffent auch ihre Anwendung als Werkstoffe für die Rapid-Prototyping-Technologie. Des weiteren lassen sich damit auch elektronische Bauelemente rationell kapseln.

Zur näheren Erläuterung der Erfindung sollen die nachfolgenden Beispiele dienen. (Darin bedeuten: PO = Polyolefin, UP = ungesättigte Polyester)

### Beispiel 1

Als Polyolefinpolymer a) wurde eine Mischung aus 90 Gew.-% eines Ethylen-Acrylsäure-Copolymeren und 10 Gew.-% eines mit Maleinsäureanhydrid modifizierten EPM-Kautschuks verwendet.

100 Gew.-Teile der Mischung und 43 Gew.-Teile eines Epoxid(EP)-Harzes (Bisphenol-A-Harz mit einem Epoxidäquivalentgewicht von 875 bis 1000 g/Eq und einer Molmasse > 700 g/mol) wurden in einem Kneter bei einer Temperatur von 130 bis 140 °C homogen vermischt. Anschließend wurden 21 Gew.-Teile eines Epoxidverdünners (1:1 Gemisch aus Hexandioldiglyzidether und einem Monoglyzidether aus C₁₂ bis C₁₄ Alkoholen mit einem Epoxidäquivalentgewicht von 200 bis 220 g/Eq) zudosiert und bis zum Erreichen einer homogenen glasigen Masse gemischt.

Danach wird unter Weiterkneten auf 90 °C abgekühlt. Durch die Abkühlung unter die Schmelztemperatur des Polyolefins findet eine Phasenseparation statt, wobei das Polyolefin mit extrem kleiner Körnung ausfällt. Es wird in der Harz-Verdünner-Lösung dispergiert. Bei 90 °C werden unter weiterer Abkühlung noch 21 Gew.-Teile des Epoxidverdünners eingearbeitet. Es entsteht eine weiche, pastenartige Dispersion mit folgender Zusammensetzung:

| | |
|---|---|
| 100 | Gew.-Teile Polyolefinpolymer a) |
| 43 | Gew.-Teile Bisphenol-A-Harz mit einem Epoxidäquivalentgewicht von 875 bis 1000 g/Eq und einer Molmasse > 700 g/mol |
| 43 | Gew.-Teile Gemisch aus Hexandioldiglyzidether und einem Monoglyzidether aus C₁₂ bis C₁₄ Alkoholen mit einem Epoxidäquivalentgewicht von 200 bis 220 g/Eq (ca. 1/1 Mischung) |

Die disperse Polyolefin(PO)-Phase hat eine mittlere Korngröße von ca. 5 µm.

Die so entstandene Dispersion wurde zu einem Plastisol.

Es wurde ein Plastisol mit folgender Zusammensetzung weiter verarbeitet.

| | |
|---|---|
| 186 | Gew.-Teile Polyolefin(PO)-Dispersion |
| 108 | Gew.-Teile 1:1-Gemisch aus Hexandioldiglyzidether und einem Monoglyzidether aus C₁₂ bis C₁₄ Alkoholen mit einem Epoxidäquivalentgewicht von 200 bis 220 g/Eq |
| 74 | Gew.-Teile Diglyzidylether des Hexandiols mit einem Epoxidäquivalentgewicht von 145 g/Eq |
| 29 | Gew.-Teile Diisononylphtalat |
| 80 | Gew.-Teile Kreide |
| 6 | Gew.-Teile N,N-(4-Methyl-m-phenylen)bis(N',N'-dimethylharnstoff) |
| 17 | Gew.-Teile Cyanoguanidin (Dicyandiamid) |
| 0,08 | Gew.-Teile Ruß |

Die Komponenten wurden in einem Mischer bei ca. 60°C homogen vermischt bis ein glasiger, pastenförmiger Zustand entsteht. Dabei darf die Massetemperatur nicht über 70 °C ansteigen. Das so hergestellte PO-Plastisol weist ein stark thixotropes Fließverhalten und eine Viskosität von 4...5 Pa*s bei 131 1/s auf.

Das PO-Organosol wurde auf verschiedene Substrate (Stahlblech, KTL-Blech, verzinktes Blech, Aluminiumblech, Glas) mit einer Schichtstärke von ca. 1,5 bis 2 mm aufgetragen. Die Ausgelierung bei 150 °C über 30 Minuten führte zu glatten und sehr gut haftenden (gummielastischen) Überzügen. Aus dem PO-Plastisol wurden gerakelte Folien-Proben bei 150 °C über 30 Minuten ausgeliert. Die Zug-Prüfung der ausgelierten Folien-Proben ergab eine Reißfestigkeit von 4,0 MPa und eine Reißdehnung von 750 %.

### Beispiel 2

Als Polyolefinpolymer a) wurde eine Mischung aus 100 Gew.-Teile eines LD-PE und 67 Gew.-Teile eines TPE-Blockpolymers verwendet.

167 Gew.-Teile der Mischung und 43 Gew.-Teile eines festen ungesättigten Polyester (UP)-Harzes wurden in einem Kneter bei einer Temperatur von 125 bis 130 °C homogen vermischt. Anschließend wurden 31 Gew.-Teile einer Lösung, bestehend aus einem flüssigen ungesättigten Polyester (UP)-Harz und einem bifunktionellen Methylacrylat (Polyethylenglykol-400-dimethacrylat) im Verhältnis 0,9:1, tropfenweise zudosiert und bis zum Erreichen einer homogenen, glasigen Masse gemischt. Danach wird die Masse unter Weiterkneten auf 90 °C abgekühlt. Durch die Abkühlung unter die Schmelztemperatur des Polyolefinpolymers a) findet eine Phasenseparation statt, wobei das Polyolefinpolymer mit extrem kleiner Körnung ausfällt und dispergiert wird. Bei 90 °C werden unter weiterer Abkühlung noch 31 Gew.-Teile der Lösung aus flüssigem UP-Harz und Polyethylenglykol-400-dimethacrylat zudosiert und homogen eingearbeitet. Unter weiterem Kühlen wird die Masse bis zum Erreichen einer Temperatur von 60 °C weitergemischt. Es entsteht eine weiche pastenartige Dispersion mit folgender Zusammensetzung:

| | |
|---|---|
| 100 | Gew.-Teile Polyolefinpolymer a) |
| 67 | Gew.-Teile TPE-Blockpolymers |
| 43 | Gew.-Teile festes UP-Harz auf der Basis Isophthalsäure und Neopentylglykol mit einem Erweichungspunkt von 80 bis 95 °C |
| 30 | Gew.-Teile flüssiges monomerfreies UP-Harz mit einer Säurezahl < 25, mit p_{25°C} = 1,04 g/cm³ |
| 33 | Gew.-Teile Polyethylenglykol-400-dimethacrylat |
| 273 | |

Die disperse PO-Phase hat eine mittlere Korngröße von ca. 5 mm. Die so entstandene Dispersion wurde zu einem PO-Plastisol mit folgender Zusammensetzung weiter verarbeitet:

| | |
|---|---|
| 273 | Gew.-Teile PO-Dispersion |
| 39 | Gew.-Teile flüssiges UP-Harz |
| 44 | Gew.-Teile Polyethylenglykol-400-dimethacrylat |
| 158 | Gew.-Teile Vinylester der Neodecansäure |
| 35 | Gew.-Teile Phthalsäurediethylhexylester |
| 10 | Gew.-Teile tert.-Butylperbenzoat |
| 28 | Gew.-Teile Kreide |
| 56 | Gew.-Teile Titandioxid |
| 14 | Gew.-Teile Fettsäuredioldiacrylat |

Die Komponenten wurden in einem Mischer homogen vermischt bis ein glasiger, pastenförmiger Zustand entsteht. Die Massetemperatur darf dabei nicht über 70 °C ansteigen.

Das so erhaltene Plastisol weist ein pseudoplastisches Fließverhalten mit einer Viskosität von 5,5 Pa*s bei 131 1/s auf.

Aus dem PO-Plastisol wurden Folien mit einer Stärke von ca. 150 mm bei 190 °C über 5 Minuten drucklos ausgeliert.

Die Zug-Prüfung der ausgelierten Folien ergab eine Reißfestigkeit von 7,5 MPa und eine Reißdehnung von 100 %.

Das PO-Plastisol wurde auch auf Papier und Textilgewebe mit einer Schichtstärke von 100 bis 200 mm aufgetragen. Die Aushärtung bei 190 °C über 5 Minuten führte zu glatten und sehr gut haftenden Überzügen. Sowohl vor, als auch nach dem Ausgelieren kann die Überzugsoberfläche mit verschiedenen Prägungen versehen werden.

### Beispiel 3

100 Gew.-Teile Polyolefinpolymer a), ein PE-Acrylsäure-Copolymer, wurden mit 100 Gew.-Teilen eines Vinylesters der Neodecansäure in einem Kneter bei einer Temperatur von 125 bis 130 °C tropfenweise zudosiert und bis zum Erreichen einer homogenen, glasigen Masse gemischt.

Danach wird die Masse unter Weiterkneten bis auf ca. 65 °C abgekühlt. Durch die Abkühlung unter die Schmelztemperatur des Polyolefinpolymers a) findet eine Phasenseparation statt, wobei das Polyolefinpolymer mit extrem kleiner Körnung ausfällt und dispergiert wird. Es entsteht eine feine Dispersion mit folgender Zusammensetzung:

| | |
|---|---|
| 100 | Gew.-Teile Polyolefinpolymer |
| 100 | Gew.-Teile Vinylester der Neodecansäure |
| 200 | |

200 Gew.-Teile dieser obigen Dispersion werden in einem Kneter bei einer Temperatur von ca. 50 °C mit einer Mischung aus 11 Gew.-Teilen eines Vinylesters der Neodecansäure, 11 Gew.-Teilen eines flüssigen UP-Harzes, 6 Gew.-Teilen 2,3-Epoxypropylmethacrylat und 3 Gew.-Teilen eines bifunktionellen Methacrylats (Polyethylenglykol-400-dimethacrylat) versetzt und homogen vermischt. 1,2 Gew.-Teile Kieselsäure und 1,7 Gew.-Teile tert.-Butylperbenzoat wurden anschließend separat zugegeben. Das entstandene Plastisol hat folgende Zusammensetzung:

| | |
|---|---|
| 200 | Gew.-Teile obige Dispersion |
| 11 | Gew.-Teile Vinylesters der Neodecansäure |
| 11 | Gew.-Teile flüssiges UP-Harz |
| 6 | Gew.-Teile 2,3-Epoxypropylmethacrylat |
| 3 | Gew.-Teile Polyethylenglykol-400-dimethacrylat |
| 1,7 | Gew.-Teile tert.-Butylperbenzoat |
| 1,2 | Gew.-Teile gefällte Kieselsäure Spuren Ruß |

Das so hergestellte PO-Plastisol hat eine Viskosität von 4,7 Pa*s bei 131 1/s.

Aus dem PO-Plastisol wurden Folien-Proben bei 150 °C über 30 Minuten ausgeliert. Die Zugprüfung der ausgelierten Proben ergab eine Reißfestigkeit von 4,5 Pa und eine Reißdehnung von 80 %.

### Beispiel 4

100 Gew.-Teile Polyolefinpolymer a) (Ethylen-Acrylsäure-Copolymer) wurden mit 77 Gew.-Teilen eines EP-Harzes (Bisphenol-A-Harz mit einem Epoxidäquivalentgewicht von 875 bis 1000 g/Eq und einer Molmasse > 700 g/mol) in einem Gleichlauf-DS-Extruder bei Temperaturen von 160 °C zu Granulat verarbeitet. Dieses Granulat wurde in einem 2. Verarbeitungsschritt bei Temperaturen von 160 °C über einer Schneckenlänge von 8*D bei einer Drehzahl von 75 U/min aufgeschmolzen. Anschließend wurden an einer 1. Dosierstelle (11*D-Schneckenlänge) bei einer Massetemperatur von ca. 123 °C 117 Gew.-Teile einer 2,6:3,3:1 Mischung aus Neodecansäurevinylester, Polyethylenglykol-400-dimethacrylat und einem flüssigen UP-Harz zudosiert.

Es entsteht eine Dispersion in Form von festen Agglomeratkrümeln mit folgender Zusammensetzung:

| | |
|---|---|
| 100 | Gew.-Teile Polyolefinpolymer a) |
| 77 | Gew.-Teile Bisphenol-A-Harz mit einem Epoxidäquivalentgewicht von 875 bis 1000 g/Eq und einer Molmasse > 700 g/mol |
| 44 | Gew.-Teile Vinylester der Neodecansäure |
| 56 | Gew.-Teile Polyethylenglykol-400-dimethacrylat |
| 17 | Gew.-Teile flüssiges UP-Harz |
| 294 | |

294 Gew.-Teile dieser Dispersion werden in einem Kneter bei einer Temperatur von ca.50...65 °C tropfenweise mit einer Mischung aus 15 Gew.-Teilen eines bifunktionellen Methacrylats (Polyethyenglykol-400-dimethacrylat), 48 Gew.-Teile eines flüssigen UP-Harzes und 16 Gew.-Teile 2,3-Epoxypropylmethacrylat versetzt und bis zum Erreichen einer homogenen, glasigen Masse homogen vermischt. Anschließend wurden Methylhexahydrophthalsäureanhydrid, Dibenzoylperoxid und hochdisperse Kieselsäure zugegeben.

Es wurde PO-Plastisol mit folgender Zusammensetzung hergestellt:

| | |
|---|---|
| 294 | Gew.-Teile o.g. Dispersion |
| 48 | Gew.-Teile flüssiges UP-Harz |
| 15 | Gew.-Teile Polyethylenglykol-400-dimethacrylat |
| 55 | Gew.-Teile Vinylester der Neodecansäure |
| 11 | Gew.-Teile Methylhexahydrophthalsäureanhydrid |
| 13 | Gew.-Teile gefällte Kieselsäure |
| 13 | Gew.-Teile Dibenzoylperoxid |

Die Komponenten wurden in einem Mischer homogen vermischt bis ein glasiger, pastenförmiger Zustand entsteht. Die Massetemperatur darf dabei nicht über 70 °C ansteigen.

Das so hergestellte PO-Plastisol weist ein thixotropes Fließverhalten mit einer Viskosität von 7,0 Pa*s bei 131 1/s auf.

Aus diesem PO-Plastisol wurden Folien-Proben bei 150 °C über 30 Minuten drucklos ausgeliert.

Die Zugprüfung der ausgelierten Folien-Proben ergab eine Reißfestigkeit von 7,0 MPa und eine Reißdehnung von 50 %.

### Beispiel 5

100 Gew.-Teile Polyolefinpolymer a) (Ethylen-Acrylsäure-Copolymer) wurden in einem Gleichlauf-DS-Extruder bei Temperaturen von 160 bis 170 °C über einer Schneckenlänge von 8*D bei einer Drehzahl von 90 U/min aufgeschmolzen. Anschließend wurden an einer 1. Dosierstelle (11*D-Schneckenlänge) bei einer Massetemperatur von ca. 124 °C 29 Gew.-Teile einer 1:1 Mischung aus Neodecansäurevinylester und Diisononylphthalat zudosiert. An einer 2. Dosierstelle (18*D-Schneckenlänge) werden bei einer Massetemperatur von ca. 94 °C weitere 24 Gew.-Teile Diisononylphthalat eingearbeitet. Es entsteht eine Dispersion in Form von festen Agglomeratkrümeln und einer Primärkorngröße von ca. 1 mm mit folgender Zusammensetzung:

| | |
|---|---|
| 100 | Gew.-Teile Polyolefinpolymer a) |
| 39 | Gew.-Teile Diisononylphthalat |
| 14 | Gew.-Teile Neodecansäurevinylester |
| 153 | |

Die so entstandene Dispersion wurde in einem Mischer zu einem PO-Plastisol mit folgender Zusammensetzung weiterverarbeitet:

| | |
|---|---|
| 153 | Gew.-Teile o.g. PO-Dispersion |
| 43 | Gew.-Teile feindisperse Kieselsäure |
| 16 | Gew.-Teile Polyethylenglykoldimethacrylat mit 4-4 Ethylenglykol-Einheiten |
| 221 | Gew.-Teile Neodecansäurevinylester |
| 79 | Gew.-Teile flüssiger EPDM-Kautschuk |
| 40 | Gew.-Teile flüssiges UP-Harz |
| 22 | Gew.-Teile tert.-Butylperbenzoat |

Die Komponenten, bis auf das tert.-Butylperbenzoat, wurden in einem Mischer bei ca. 60-70 °C homogen vermischt bis ein glasiger, pastenförmiger Zustand entsteht. Die hochdisperse Kieselsäure wird zuerst in die PO-Dispersion eingearbeitet. Der flüssige Kautschuk und das UP-Harz werden zusammen mit dem Neodecansäurevinylester zudosiert. Die Einarbeitung von tert.-Butylperbenzoat erfolgt zum Schluß bei Temperaturen T< 50 °C. Das so hergestellte PO-Plastisol weist ein ausgeprägtes thixotropes Fließverhalten mit einer Viskosität von 8,5 Pa*s bei 131 1/s auf.

Das PO-Plastisol wurde auf verschiedene Substrate (Stahlblech, KTL-Blech, verzinktes Blech, Aluminiumblech, Glas) mit einer Schichtdicke von ca. 1,5 bis 2 mm aufgetragen. Die kombinierte Aushärtung in 25 min bei 115 °C und in 10 min bei 150 °C führte zu glatten und sehr gut haftenden, gummielastischen Überzügen. Aus dem PO-Plastisol wurden drucklos Folien-Proben ausgeliert.

Die Zugprüfung der ausgelierten Folien-Proben ergab eine Reißfestigkeit von 5,0 MPa und eine Reißdehnung von 280 %.

### Beispiel 6

Als Polyolefinpolymer wurde eine Mischung aus 100 Gew.-Teile eines LD-PE, 17 Gew.-Teile eines EPDM-Kautschuks und 7 Gew.-Teile eines TPE-Blockpolymers verwendet. Die Polymerkomponenten wurden in einem Sigma-Mischer bei einer Temperatur von über 130 °C zunächst aufgeschmolzen und homogen vermischt. Anschließend wurden 12,8 Gew.-Teile eines Laurylacrylates bezüglich 100 Gew.-Teile des Polyolefinpolymers portionsweise zudosiert und bis zur Erreichung einer homogenen glasigen Masse gemischt. Danach wird die Abkühlung der Masse unter Weitermischen eingeleitet. Innerhalb des Temperaturbereiches 95...80 °C wurden unter weiterer Abkühlung 16,4 Gew.-Teile eines 2-Hydroxyethylmethacrylat und 2,6 Gew.-Teile eines Polyethylenglykoldimethacrylat zudosiert und homogen eingearbeitet. Unter weiterem Kühlen wird die Masse bis zum Erreichen einer Temperatur von 50...60 °C weitergemischt. E entsteht eine weiche pastenartige Masse.

Dispersion mit folgender Zusammensetzung:

| | |
|---|---|
| 100 | Gew.-Teile PO-Polymer |
| 12,8 | Gew.-Teil Laurylacrylat |
| 16,4 | Gew.-Teile 2 Hydroxyethylmethacrylat |
| 2,6 | Gew.-Teile Polyethylenglykoldimethacrylat |
| 131,8 | |

Die so entstandene Dispersion wurde anschließend zu einem PO-Plastisol mit folgender Zusammensetzung weiterverarbeitet;

| | |
|---|---|
| 131,8 | Gew.-Teile PO-Dispersion |
| 19,0 | Gew.-Teile Laurylacrylat |
| 3,5 | Gew.-Teile Kreide |
| 0,75 | Gew.-Teile Aerosol |
| 0,65 | Gew.-Teile Ruß |
| 1.4 | Gew.-Teile Peroxid (TBPEH) |

Das so hergestellt PO-Plastisol weist ein thixotropes Fließverhalten mit einer Viskosität von 1,65 Pa*s bei 131 1/s auf.

Aus diesem PO-Plastisol wurden Folien-Proben (300 mm) bei 190 °C über 5 min drucklos ausgeliert.

Die Zugprüfung der ausgelierten Folien-Proben ergab eine Reißfestigkeit von 4,5 MPa und eine Reißdehnung von 210 %. Das PO-Plastisol wurde auf KTL-Bleck mit einer Schichtdicke von ca. 1,5 bis 2 mm aufgetragen und bei 130 °C über 30 min zu glatten und sehr gut haftenden Überzügen ausgeliert.

Des weiteren wurde das PO-Plastisol auch auf Textil- und Papier-Substrate mit einer Schichtdicke von 150...250 mm aufgetragen und bei 190 °C über 2 min zu glatten, sehr gut haftenden und geruchslosen Beschichtungen ausgeliert. Es wurden auch mehrschichtige Textil-Beschichtungen durch Direkt- und Umkehrverfahren hergestellt, die prägbar, lackierbar und bedruckbar sind und keine Verzugsneigung aufweisen.

## Patentansprüche

1. Chlorfreies Plastisol bzw. Organosol auf Polyolefin-Basis, das gegebenenfalls inerte Füllstoffe sowie weitere übliche Zusatz- und Hilfsstoffe enthält, **dadurch gekennzeichnet, dass** es aus
a) einem feindispergierten Polyolefin in
b) einem Dispersionsmittel in Mengen von 60 bis 800 Gew.-Teilen, bezogen auf 100 Gew.-Teile Polyolefin a), zusammengesetzt aus polyadditionsfähigen oder polymerisierbaren und copolymerisierbaren Monomeren und/oder Oligomeren und/oder Prepolymeren sowie gegebenenfalls flüssigen Weichmachern, die in lösbaren und mischbaren Anteilen so zusammengesetzt wird, dass die Differenz zwischen seinem Lösungsparameter und dem Lösungsparameter des Polyolefins a) unterhalb 2,5 (J/cm³)^{0,5} liegt, sowie
c) einem für die gewünschte Polyaddition und/oder Polymerisation und Copolymerisation geeignetem Initiator-System in an sich bekannten Mengen und
d) gegebenenfalls bis zu 700 Gew.-Teile inerten Füllstoffe sowie weiteren üblichen Zusatz- und Hilfsstoffen, bezogen auf 100 Gew.-Teile Polyolefin a), besteht und in 2 oder 3 unterschiedlichen Temperaturstufen dadurch hergestellt worden ist, dass
1. ein in grobstückiger Form vorliegendes Polyolefin a) in einer Mischeinrichtung bei einer Temperatur wenigstens 10°C oberhalb seiner Schmelztemperatur mit mindestens 20 bis 60 Gew.-Teilen (vorzugsweise 25 bis 35 Gew.-Teilen) eines Dispersionsmittels b) bzw. einigen ausgewählten Komponenten des Dispersionsmittels b), bezogen auf 100 Gew.-Teile Polyolefin a) homogen vermischt wird,
2. anschließend unter fortwährendem intensivem Mischen auf eine Temperatur von 5 bis 20°C unterhalb der Schmelztemperatur des Polyolefins a) abgekühlt wird - und gegebenenfalls noch mit 5 bis 70 Gew.-Teilen des Dispersionsmittels b) oder einiger ausgewählten Komponenten des Dispersionsmittels b), bezogen auf 100 Gew.-Teile Polyolefin a) zudosiert und homogen vermischt werden -, wodurch eine feinteilige Dispersion des Polyolefins a) im Dispersionsmittel b) oder in den ausgewählten Komponenten des Dispersionsmittels b) entsteht und
3. dann bei einer Temperatur unterhalb 60°C mit den restlichen Komponenten des Dispersionsmittels b) bis zu einer Gesamtmenge von 60 bis 800 Gew.-Teile Dispersionsmittel b), bezogen auf 100 Gew.-Teile Polyolefin a) und mit einem geeigneten Initiator-System c) in an sich bekannten Mengen sowie mit bis zu 700 Gew.-Teile inerter Feststoffe und üblicher Hilfs- und Zusatzstoffe d) versetzt und zu einer pastenförmigen Masse mit dem gewünschten Fließverhalten verarbeitet wird.

2. Chlorfreies Plastisol bzw. Organosol auf Polyolefin-Basis nach Anspruch 1, **dadurch gekennzeichnet, dass** als Polyolefin a) Polyethylen, Polypropylen und/oder Copolymere des Ethylens und Propylens mit einem oder mehreren olefinisch ungesättigten, mit diesen Olefinen copolymerisierbaren Monomeren eingesetzt werden.

3. Chlorfreies Plastisol bzw. Organosol auf Polyolefin-Basis nach Anspruch 1, **dadurch gekennzeichnet, dass** ein Polyolefin a) verwendet wird, das mit polaren und/oder reaktiven Gruppen wie Säuren und Ester modifiziert wurde.

4. Chlorfreies Plastisol bzw. Organosol auf Polyolefin-Basis nach Anspruch 1 bis 3, **dadurch gekennzeichnet, dass** als Polyolefine a) Mischungen verschiedener Polyolefine eingesetzt werden.

5. Chlorfreies Plastisol bzw. Organosol auf Polyolefin-Basis nach einem oder mehreren der Ansprüche 1 bis 4, **dadurch gekennzeichnet, dass** ein Polyolefin a) verwendet wird, das bis 80 Gew. % mit verträglichen bzw. teilverträglichen Kautschuken und/oder TPE-Blockcopolymeren homogen vermischt ist.

6. Chlorfreies Plastisol bzw. Organosol auf Polyolefinbasis nach einem oder mehreren der Ansprüche 1 bis 5, **dadurch gekennzeichnet, dass** ein Dispergiermittel verwendet wird, das aus Epoxidverbindungen (Monomere und/oder Oligomere und/oder Prepolymere) und gegebenenfalls flüssigen Weichmachern besteht, wobei für das Ausgelieren des Plastisols bzw. Organosols ein Initiator-System c) auf Basis latenter Polyadditionsinitiatoren, katalytisch wirkender Lewis-saurer Polymerisationsinitiatoren, latenter Carbonsäuresalze tertiärer Amine und/oder üblicher kationischer Photoinitiatoren verwendet wird.

7. Chlorfreies Plastisol bzw. Organosol auf Polyolefin-Basis nach einem oder mehreren der Ansprüche 1 bis 5, **dadurch gekennzeichnet, dass** ein Dispergiermittel verwendet wird, das aus radikalisch polymerisierbaren und copolymerisierbaren Allyl- und/oder Vinyl- und/oder (Meth)acrylat-Verbindungen (Monomere und/oder Oligomere und/oder Prepolymere) und/oder ungesättigten Polyester-, Vinylester-, Polyesteracrylat-Harzen sowie gegebenenfalls flüssigen Weichmachern besteht, wobei für das Ausgelieren des Plastisols bzw. Organosols durch eine Polymerisation und Copolymerisation ein Initiator-System c) aus radikalischen Initiatoren, wie z. B. üblichen organischen Peroxiden, und/oder geeignete Photoinitiatoren verwendet wird.

8. Chlorfreies Plastisol bzw. Organosol auf Polyolefin-Basis nach einem oder mehreren der Ansprüche 1 bis 5, **dadurch gekennzeichnet, dass** ein Dispergiermittel verwendet wird, das aus Epoxidverbindungen (Monomere und/oder Oligomere und/oder Prepolymere) und Allyl- und/oder Vinylund/oder (Meth)-acrylat-Verbindungen und/oder ungesättigten Polyester-, Vinylester-, Polyesteracrylat-Harzen und gegebenenfalls flüssigen Weichmachern besteht, wobei für das Ausgelieren des Plastisols bzw. Organosols durch kombinierte Polyaddition und Polymerisation sowie Copolymerisation ein Initiator-System c) aus gesättigten oder ungesättigten Säureanhydriden und radikalische Initiatoren, wie z. B. üblichen organischen Peroxiden, und/oder geeignete Photoinitiatoren verwendet wird.

9. Verfahren zur Herstellung eines chlorfreien Plastisols bzw. Organosols auf Polyolefinbasis nach einem oder mehreren der Ansprüche 1 bis 8, **dadurch gekennzeichnet, dass**
1. ein in grobstückiger Form vorliegendes Polyolefin b) in einer Mischeinrichtung bei einer Temperatur wenigstens 10°C oberhalb seiner Schmelztemperatur mit mindestens 20 bis 60 Gew.-Teilen eines Dispersionsmittels b) bzw. einiger ausgewählten Komponenten des Dispersionsmittels b), bezogen auf 100 Gew.-Teile Polyolefin a) homogen vermischt wird
2. anschließend unter fortwährendem intensivem Mischen auf eine Temperatur von 5 bis 20°C unterhalb der Schmelztemperatur des Polyolefins a) abgekühlt wird - und gegebenenfalls noch mit 5 bis 70 Gew.-Teilen des Dispersionsmittels b) oder einiger ausgewählter Komponenten des Dispersionsmittels b), bezogen auf 100 Gew.-Teile Polyolefin a) zudosiert und homogen vermischt werden-, wodurch eine feinteilige Dispersion des Polyolefins a) im Dispersionsmittel b) oder in den ausgewählten Komponenten des Dispersionsmittels b) entsteht und
3. dann bei einer Temperatur unterhalb 60°C mit dem restlichen Dispersionsmittel b) mit den restlichen Komponenten des Dispersionsmittels b) bis zu einer Gesamtmenge von 60 bis 800 Gew.-Teile Dispersionsmittel b), bezogen auf 100 Gew.-Teile Polyolefin a) und mit einem geeigneten Initiator-System c) in an sich bekannten Mengen sowie mit bis zu 700 Gew.-Teile inerter Feststoffe und üblicher Hilfs- und Zusatzstoffe d) versetzt und zu einer pastenförmigen Masse mit dem gewünschten Fließverhalten verarbeitet wird.

10. Verfahren zur Herstellung eines chlorfreien Plastisols bzw. Organosols auf Polyolefinbasis nach Anspruch 9, **dadurch gekennzeichnet, dass** im 1. Verfahrensschritt das Polyolefin a) mit 25 bis 35 Gew.-Teilen des Dispersionsmittels b) oder einigen ausgewählten Komponenten des Dispersionsmittels b), bezogen auf 100 Gew.-Teile Polyolefin a), vermischt und homogenisiert wird.

11. Verfahren zur Herstellung eines chlorfreien Plastisols bzw. Organosols auf Polyolefinbasis nach Anspruch 10, **dadurch gekennzeichnet, dass** im 2. Verfahrensschritt zusätzlich 5 bis 70 Gew.-Teile des Dispersionsmittels b) oder einer Komponente des Dispersionsmittels, bezogen auf 100 Gew.-Teile Polyolefin a), bei einer Temperatur von 5 bis 20°C unterhalb der Schmelztemperatur des Polyolefins a) eingearbeitet werden.

## Claims

1. A chlorine-free polyolefin-based plastisol or organosol that may optionally contain inert fillers and other common additives and adjuvants, **characterized in that** it contains
a) a finely dispersed polyolefin in
b) a dispersing agent in quantities of 60 to 800 parts by weight, in relation to 100 parts by weight polyolefin a), made up of monomers which are capable of polyaddition or which are polymerizable and copolymerizable and/or oligomers and/or prepolymers and, optionally, liquid softeners composed in such a way in its soluble and mixable portions that the difference between its solution parameter and the solution parameter of the polyolefin a) is below 2.5 (J/cm³)^{0.5}; and
c) an initiator system which is suitable for the desired polyaddition and/or polymerization and copolymerization in quantities known per se; and
d) optionally, up to 700 parts by weight of inert fillers and other common additives and adjuvants, in relation to 100 parts by weight of polyolefin a) and is produced in 2 or 3 different temperature levels in 2 or 3 by
1. homogeneously mixing a lumpy polyolefin a) in a mixing apparatus at a temperature 10°C or more above its melting temperature in quantities of at least 20 to 60 parts by weight (preferably 25 to 35 part by weight) of a dispersing agent b) or some selected components of a dispersing agent b), in relation to 100 parts by weight of polyolefin a),
2. subsequently cooling the batch under continued intense intermixing down to a temperature of 5 to 20°C below the melting temperature of polyolefin a) - and optionally adding and homogeneously intermixing 5 to 70 parts by weight of dispersing agent b) or some selected components of a dispersing agent b), in relation to 100 parts by weight polyolefin a) -, to produce a fine-particle dispersion of polyolefin a) in the dispersing agent b) or some selected components of a dispersing agent b), and
3. finally intermixing the batch with the remaining dispersing agent b) at a temperature below 60 °C up to a total quantity of 60 to 800 parts by weight of dispersing agent b), in relation to 100 parts by weight polyolefin a) and with a suitable initiator system c) in quantities known per se as well as with up to 700 parts by weight of inert solids and common additives and adjuvants d), and processing it into a paste-like melt with the desired rheological behavior.

2. The chlorine-free polyolefin-based plastisol or organosol according to claim 1 wherein polyethylene, polypropylene and/or copolymers of ethylene and propylene with one or several olefinically unsaturated monomer(s) that can be copolymerized with these olefins are used as polyolefin a).

3. The chlorine-free polyolefin-based plastisol or organosol according to claim 1 wherein a polyolefin a) is used that has been modified with polar and/or reactive groups such as acids and esters.

4. The chlorine-free polyolefin-based plastisol or organosol according to claims 1 through 3 wherein mixtures of different polyolefins are used as polyolefin a).

5. The chlorine-free polyolefin-based plastisol or organosol according to one or several of the preceding claims 1 through 4 wherein a polyolefin a) is used that is homogeneously intermixed to up to 80 percent by weight with compatible or partially compatible rubbers and/or TPE block copolymers.

6. The chlorine-free polyolefin-based plastisol or organosol according to one or several of the preceding claims 1 through 5 wherein a dispersing agent is used that consists of epoxide compounds (monomers and/or oligomers and/or prepolymers) and, optionally, of liquid softeners, and wherein an initiator system based on latent polyaddition initiators, catalytic Lewis acid polymerization initiators or latent carboxylic acid salts of tertiary amines and/or common cationic photoinitiators is used for gelating the plastisol.

7. The chlorine-free polyolefin-based plastisol or organosol according to one or several of the preceding claims 1 through 5 wherein a dispersing agent is used that consists of radically polymerizable and copolymerizable allyl and/or vinyl and/or (meth)acrylate compounds (monomers and/or oligomers and/or prepolymers) and/or unsaturated polyester, vinyl ester, polyester acrylate resins and optional liquid softeners; and wherein an initiator system c) made of free-radical initiators such as common organic peroxides and/or suitable photoinitiators is used for gelating the plastisol or organosol in a polymerization or copolymerization process.

8. The chlorine-free polyolefin-based plastisol or organosol according to one or several of the preceding claims 1 through 5 wherein a dispersing agent is used that consists of epoxide compounds (monomers and/or oligomers and/or prepolymers) and allyl and/or vinyl and/or (meth)acrylate compounds and/or unsaturated polyester, vinyl ester, polyester acrylate resins and optional liquid softeners; and wherein an initiator system c) made of saturated and unsaturated acid anhydrides and free-radical initiators such as common organic peroxides and/or suitable photoinitiators is used for gelating the plastisol or organosol in a combined polyaddition, polymerization and copolymerization process.

9. A method for producing a chlorine-free polyolefin-based plastisol or organosol according to one or several of claims 1 through 8, **characterized in that** it involves
1. homogeneously mixing a lumpy polyolefin b) in a mixing apparatus (kneader, dissolver, extruder) at a temperature 10°C or more above its melting temperature in quantities of at least 20 to 60 parts by weight of a dispersing agent b) or some selected components of a dispersing agent b), in relation to 100 parts by weight polyolefin a),
2. subsequently cooling the batch under continued intense intermixing down to a temperature of 5 to 20°C below the melting temperature of polyolefin a) - and optionally adding and homogeneously intermixing 5 to 70 parts by weight of dispersing agent b) or some selected components of a dispersing agent b), in relation to 100 parts by weight polyolefin a) -, to produce a fine-particle dispersion of polyolefin a) in the dispersing agent b) or some selected components of a dispersing agent b), and
3. finally intermixing the batch with the remaining dispersing agent b) or the remaining components of the dispersing agent b) at a temperature below 60°C up to a total quantity of 60 to 800 parts by weight dispersing agent b), in relation to 100 parts by weight polyolefin a) and with a suitable initiator system c) in quantities known per se as well as with up to 700 parts by weight inert solids and common additives and adjuvants d) and processing it into a paste-like melt with the desired rheological behavior.

10. The method for producing a chlorine-free polyolefin-based plastisol or organosol according to claim 9 wherein the polyolefin a) is mixed and homogenized in the first process step with 25 to 35 parts by weight of the dispersing agent b) or some selected components of the dispersing agent b), in relation to 100 parts by weight of polyolefin a).

11. The method for producing a chlorine-free polyolefin-based plastisol or organosol according to claim 10 wherein additional 5 to 70 parts by weight of the dispersing agent b) or a component thereof, in relation to 100 parts by weight of polyolefin a), are worked in in a second process step at a temperature 5 to 20°C below the melting temperature of polyolefin a).

## Revendications

1. Plastisol ou organosol exempt de chlore à base de polyoléfine, qui comprend le cas échéant des matières de remplissage inertes ainsi que d'autres additifs ou substances auxiliaires usuels, **caractérisé en ce qu'**il se compose :
a) d'une polyoléfine finement dispersée dans
b) un milieu dispersif en quantités de 60 à 800 parts pondérales, par référence à 100 parts pondérales de polyoléfine a), se composant de monomères et/ou d'oligomères et/ou de prépolymères ainsi que, le cas échéant d'adoucisseurs liquides, aptes à la polyaddition ou pouvant être polymérisés et copolymérisés, lequel est composé de parts pouvant être dissoutes et mélangées de sorte que la différence entre son paramètre de solution et le paramètre de solution de la polyoléfine a) est inférieur à 2,5 (J/cm³)^{0,5} ; ainsi que
c) d'un système d'excitant approprié pour la polyaddition et/ou la polymérisation et la copolymérisation souhaitée dans des quantités connues en soi ; et
d) le cas échéant, de jusqu'à 700 parts pondérales de matières de remplissage inertes ainsi que d'autres additifs ou substances auxiliaires usuels, par référence à 100 parts pondérales de polyoléfine a), et en **en ce qu'**il a été préparé en 2 ou 3 étages de température différents, par les opérations suivantes :
1. une polyoléfine a) existant sous forme de gros morceaux est mélangée de manière homogène dans un dispositif de mélange à une température supérieure d'au moins 10°C à sa température de fusion, avec au moins 20 à 60 parts pondérales (de préférence 25 à 35 parts pondérales) d'un agent de dispersion b), ou de quelques composants sélectionnés de l'agent de dispersion b), par référence à 100 parts pondérales de polyoléfine a) ;
2. la mixture est ensuite refroidie à une température de 5 à 20°C inférieure à la température de fusion de la polyoléfine a), sous mélange intensif et continu, et, le cas échéant, elle est encore additionnée et mélangée de manière homogène à 5 à 70 parts pondérales de l'agent de dispersion b), ou de quelques composants sélectionnés de l'agent de dispersion b), par référence à 100 parts pondérales de polyoléfine a), grâce à quoi il se forme une dispersion à particules fines de la polyoléfine a) dans l'agent de dispersion b) ou dans les composants sélectionnés de l'agent de dispersion b) ; et
3. la mixture est ensuite additionnée, sous une température inférieure à 60°C, aux composants résiduels de l'agent de dispersion b) jusqu'à une quantité totale de 60 à 800 parts pondérales d'agent de dispersion b), par référence à 100 parts pondérales de polyoléfine a), et à un système d'excitant approprié c) dans des quantités connues en soi, ainsi jusqu'à 700 parts pondérales de substances solides inertes ainsi que d'autres additifs ou substances auxiliaires usuels d), et traitée pour former une masse pâteuse avec le comportement de fluage souhaité.

2. Plastisol ou organosol exempt de chlore à base de polyoléfine selon la revendication 1, **caractérisé en ce que** du polyéthylène, du polypropylène et/ou des copolymères de l'éthylène et du propylène comprenant un ou plusieurs monomères oléfiniques non saturés et pouvant être copolymérisés avec ces oléfines, sont utilisés comme polyoléfine a).

3. Plastisol ou organosol exempt de chlore à base de polyoléfine selon la revendication 1, **caractérisé par** l'utilisation d'une polyoléfine a) qui a été modifiée avec des radicaux polaires et/ou réactifs, comme des acides et des esters.

4. Plastisol ou organosol exempt de chlore à base de polyoléfine selon l'une des revendications 1 à 3, **caractérisé en ce que** des mélanges de différentes polyoléfines sont utilisés comme polyoléfine a).

5. Plastisol ou organosol exempt de chlore à base de polyoléfine selon l'une ou plusieurs des revendications 1 à 4, **caractérisé par** l'utilisation d'une polyoléfine a) qui est mélangée de manière homogène à jusqu'à 80% en poids à des caoutchoucs et/ou à des polymères blocs du type TPE, compatibles ou partiellement compatibles.

6. Plastisol ou organosol exempt de chlore à base de polyoléfine selon l'une ou plusieurs des revendications 1 à 5, **caractérisé par** l'utilisation d'un agent de dispersion qui se compose de liaisons époxy (monomères et/ou oligomères et/ou pré-polymères) et, le cas échéant d'adoucisseurs liquides, un système d'excitant c) à base d'excitants de polyaddition latents, d'excitants de polymérisation acides du type Lewis à action catalytique, de sels latents d'acide carbonique d'amines tertiaires et/ou de photoinitiateurs cationiques usuels, étant utilisé pour la gélification du plastisol ou de l'organosol.

7. Plastisol ou organosol exempt de chlore à base de polyoléfine selon l'une ou plusieurs des revendications 1 à 5, **caractérisé par** l'utilisation d'un agent de dispersion qui se compose de liaisons allyle, et/ou vinyle et/ou méthacrylate (monomères et/ou oligomères et/ou pré-polymères) pouvant être polymérisées et copolymérisées à partir de radicaux, et/ou des résines non saturées à base de polyester, d'ester vinylique et d'ester de polyacrylate ainsi que, le cas échéant, d'adoucisseurs liquides, un système d'excitant c) se composant d'excitants radicaux, comme par exemple des peroxydes organiques usuels et/ou des photoinitiateurs appropriés, étant utilisé pour la gélification du plastisol ou de l'organosol, via une polymérisation et une copolymérisation.

8. Plastisol ou organosol exempt de chlore à base de polyoléfine selon l'une ou plusieurs des revendications 1 à 5, **caractérisé par** l'utilisation d'un agent de dispersion qui se compose de liaisons époxy (monomères et/ou oligomères et/ou pré-polymères) et de liaisons allyle, et/ou vinyle et/ou méthacrylate et/ou de résines non saturées à base de polyester, d'ester vinylique et d'ester de polyacrylate, et, le cas échéant, d'adoucisseurs liquides, un système d'excitant c) se composant d'anhydrides acides saturées ou non saturées et d'excitants radicaux, comme par exemple des peroxydes organiques usuels et/ou des photoinitiateurs appropriés, étant utilisé pour la gélification du plastisol ou de l'organosol, via une combinaison de polyaddition et de polymérisation ainsi que de copolymérisation.

9. Procédé pour fabriquer un plastisol ou organosol exempt de chlore à base de polyoléfine selon l'une ou plusieurs des revendications 1 à 8, **caractérisé en ce que** :
1. une polyoléfine a) existant sous forme de gros morceaux est mélangée de manière homogène dans un dispositif de mélange à une température d'au moins 10°C supérieure à sa température de fusion, avec au moins 20 à 60 parts pondérales d'un agent de dispersion b), ou de quelques composants sélectionnés de l'agent de dispersion b), par référence à 100 parts pondérales de polyoléfine a) ;
2. la mixture est ensuite refroidie à une température de 5 à 20°C inférieure à la température de fusion de la polyoléfine a), sous mélange intensif et continu, et, le cas échéant, elle est encore additionnée et mélangée de manière homogène à 5 à 70 parts pondérales de l'agent de dispersion b), ou de quelques composants sélectionnés de l'agent de dispersion b), par référence à 100 parts pondérales de polyoléfine a), grâce à quoi il se forme une dispersion à particules fines de la polyoléfine a) dans l'agent de dispersion b) ou dans les composants sélectionnés de l'agent de dispersion b) ; et
3. la mixture est ensuite additionnée, sous une température inférieure à 60°C, aux composants résiduels de l'agent de dispersion b) jusqu'à une quantité totale de 60 à 800 parts pondérales d'agent de dispersion b), par référence à 100 parts pondérales de polyoléfine a), et à un système d'excitant approprié c) dans des quantités connues en soi, ainsi que jusqu'à 700 parts pondérales de substances solides inertes ainsi que d'autres additifs ou substances auxiliaires usuels d), et traitée pour former une masse pâteuse avec le comportement de fluage souhaité.

10. Procédé pour fabriquer un plastisol ou organosol exempt de chlore à base de polyoléfine selon la revendication 9, **caractérisé en ce que**, dans la première étape du procédé, la polyoléfine a) est mélangée à 25 à 30 parts pondérales de l'agent de dispersion b), ou à quelques composants sélectionnés de l'agent de dispersion b), par référence à 100 parts pondérales de polyoléfine a), puis est homogénéisée.

11. Procédé pour fabriquer un plastisol ou organosol exempt de chlore à base de polyoléfine selon la revendication 10, **caractérisé en ce que**, dans la seconde étape du procédé, 5 à 70 parts pondérales de l'agent de dispersion b), ou d'un composant de l'agent de dispersion, par référence à 100 parts pondérales de polyoléfine a), sont additionnées en supplément à une température de 5 à 20°C inférieure à la température de fusion de la polyoléfine a).
